# EUROPEAN PATENT APPLICATION

(11) **EP 4 610 230 A1**
(43) Date of publication of application: **03.09.2025**
(21) Application number: 24160974.2
(22) Date of filing: 01.03.2024
(51) Int. Cl.: C01F 17/34

(54) **SYNTHESIS OF HIGH-QUALITY GARNET NANOPARTICLES**

(71) Applicant: Seaborough Materials IP B.V., 1098 XG Amsterdam (NL)
(72) Inventor: MONTANARELLA, Frederico, 3581 LG UTRECHT (NL); SONTAKKE, Atul Dnyaneshwar, 1363 BL ALMERE (NL); KHANIN, Vasilii Mikhailovich, 1096 HV Amsterdam (NL); VAN DE HAAR, Marie Anne, 2121 XD BENNEBROEK (NL)
(74) Representative: Hoyng Rokh Monegier B.V.

(57) **Abstract**

The invention relates to a method for preparing rare-earth metal doped garnet nanoparticles, comprising the steps of: (a) providing (i) a first metal salt and/or alkoxide, wherein said first metal is one or more of yttrium, lutetium, gadolinium and lanthanum, (ii) a second metal salt and/or alkoxide, wherein said second metal is one or more of aluminum, gallium and scandium, (iii) a third metal salt and/or alkoxide, wherein said third metal is at least one optically active ion, and (iv) a solvent mixture comprising a glycol and a further alcohol; (b) preparing a reaction mixture comprising said (i) first metal salt and/or alkoxide, said (ii) second metal salt and/or alkoxide, said (iii) third metal salt and/or alkoxide, and said (iv) solvent mixture; and (c) heating the reaction mixture, wherein the heating conditions are characterized in that: the pressure during heating is in the range of 20-200 bar, and the reaction mixture is heated at 300-400 °C for 120 minutes or less. The invention further relates to rare-earth metal doped garnet nanoparticles obtainable by the method of the invention, having the having the structure of (M1₁₋ₓM3ₓ)₃(M2)₅O₁₂, wherein M1 is one or more of yttrium, lutetium, gadolinium and lanthanum; M2 is one or more of aluminum, gallium and scandium; and M3 is one or more optically active ions, characterized by: i. a mean particle size D50 of 10 nm or less, preferably 8 nm or less, and preferably 1 nm or more; and ii. a QY of 60% or more, preferably 80% or more.

## Description

### FIELD OF THE INVENTION

This invention relates to a method for producing rare earth doped garnet nanoparticles with superior properties. The invention further relates to the rare earth doped garnet nanoparticles and their superior properties.

### BACKGROUND OF THE INVENTION

One of the methods to synthesize rare-earth doped garnet nanoparticles is the solvothermal method. In this method, all the reagents (metal precursors, glycols and diols) are mixed together in an autoclave and reacted at high temperatures (200-300 °C) and pressures (> 10-20 bars) for a certain amount of time (1-48h) (Odziomek et al. 2017). These conditions can produce individual particles with sizes around 10-20 nm and reasonably high quantum yield (QY) (^{~} 50%). However, these particles tend to not be stable, are ill-defined in shape and have a tendency to aggregate.

There is thus a need for a method to synthesize rare-earth doped garnet nanoparticles, that produces garnet nanoparticles which are stable, well-defined and do not aggregate, while maintaining a particle size of about 10nm and a high QY.

### SUMMARY OF THE INVENTION

There is provided a method for preparing rare-earth metal doped garnet nanoparticles, comprising the steps of:
(a) providing
   (i) a first metal salt and/or alkoxide, wherein said first metal is one or more of yttrium, lutetium, gadolinium and lanthanum,
   (ii) a second metal salt and/or alkoxide, wherein said second metal is one or more of aluminum, gallium and scandium,
   (iii) a third metal salt and/or alkoxide, wherein said third metal is at least one optically active ion, and
   (iv) a solvent mixture comprising a glycol and a further alcohol;
(b) preparing a reaction mixture comprising said (i) first metal salt and/or alkoxide, said (ii) second metal salt and/or alkoxide, said (iii) third metal salt and/or alkoxide, and said (iv) solvent mixture; and
(c) heating the reaction mixture, wherein the heating conditions are characterized in that:
   - the pressure during heating is in the range of 20-200 bar, and
   - the reaction mixture is heated at 300-400 °C for 120 minutes or less.

The method of the invention allows to obtain garnet nanoparticles having the structure of (M1₁₋ₓM3ₓ)₃(M2)₅O₁₂, wherein M1 is one or more of yttrium, lutetium, gadolinium and lanthanum, M2 is one or more of aluminum, gallium and scandium, and M3 is one or more optically active ions.

It has been found that the use of high temperature and high pressure ensures the formation of crystalline particles with high incorporation of rare ions, with a minimal amount of defects. Furthermore, these conditions also ensure that the particles retain a small size (< 10 nm). Although high temperatures generally result in faster decomposition of the alcohol and faster generation of water, leadingto coalescence of the particles and oxidation of the rare earth metal ions, this is avoided by the short reaction time.

There is further provided rare-earth metal doped garnet nanoparticles having the structure of (M1₁₋ₓM3ₓ)₃(M2)₅O₁₂:, wherein M1 is one or more of yttrium, lutetium, gadolinium and lanthanum; M2 is one or more of aluminum, gallium and scandium; and M3 is one or more optically active ions, characterized by:
i. a mean particle size D50 of 10 nm or less, preferably 8 nm or less, and preferably 1 nm or more; and
ii. a QY of 60% or more, preferably 80% or more. The nanoparticles are obtainable by the method of the invention.

The nanoparticles according to the invention show desirable qualities for light applications.

### BRIEF DESCRIPTION OF FIGURES

FIGURE 1 shows reflectance spectra for YAG:Ce particles according to Examples 1-3.
FIGURE 2 shows reflectance spectra for YAG:Ce particles according to Examples 4-7.
FIGURE 3 shows excitation and emission spectra for YAG:Ce particles according to Examples 8-9.
FIGURE 4 shows the quantum yield of YAG:Ce particles as a function of metal precursor concentration in the reaction mixture.

### DETAILED DESCRIPTION

### Method

The method according to the invention comprises the step of (a) providing:
(i) a first metal salt and/or alkoxide,
(ii) a second metal salt and/or alkoxide,
(iii) a third metal salt and/or alkoxide, wherein said third metal is at least one optically active ion, and
(iv) a solvent mixture comprising a glycol and at least a further alcohol.

The first metal is one or more of yttrium, lutetium, gadolinium and lanthanum.

The first metal may be provided as a metal salt or as a metal alkoxide.

When a metal salt is used, the first metal salt is preferably selected from the group consisting of halides, acetates, acetylacetonates, sulfates, and nitrates.

When an alkoxide is used, the first metal alkoxide preferably has the formula M1(OR)₃, wherein RO⁻ is the alkoxide and R is a C1-C4 group. Preferably, the alkoxide is an isopropoxide, ethoxide and/or tert-butoxide.

More preferably, the (i) first metal salt and/or alkoxide is provided as a metal salt, more preferably as a metal acetate salt, such as yttrium acetate or lutetium acetate.

Preferably, the (i) first metal salt and/or alkoxide is substantially anhydrous, and/or is subjected to a water-extracting step. The presence of too much water can cause oxidation and agglomeration of the particles. The water-extracting step may be any known in the art. Preferably, said water-extracting is performed by heating the metal salt and/or alkoxide to at least 110 °C, using a vacuum pump to apply a pressure of 10⁻³ mbar, and providing a water-scavenging compound such as P₂O₅ between the vacuum pump and the metal salt and/or alkoxide to remove water.

The second metal is one or more of aluminum, gallium and scandium. Preferably, the second metal is aluminum.

The second metal may be provided as a metal salt or as a metal alkoxide.

When a metal salt is used, the second metal salt is preferably selected from the group consisting of halides, acetates, acetylacetonates, sulfates, and nitrates.

When an alkoxide is used, the second metal alkoxide preferably has the formula M2(OR)₃, wherein RO⁻ is the alkoxide and R is a C1-C4 group. Preferably, the alkoxide is an isopropoxide, ethoxide and/or tert-butoxide.

Preferably, the (ii) second metal salt and/or alkoxide is provided as a metal alkoxide, more preferably as a metal isopropoxide.

Preferably, the first metal comprises, more preferably consists essentially of, yttrium and/or lutetium, and the second metal comprises, more preferably consists essentially of, aluminium. This results in yttrium aluminium garnets (YAG), lutetium aluminium garnets (LuAG), or yttrium lutetium aluminium garnets ((Y,Lu)AG).

The third metal is at least one optically active ion. Optically active ions can be selected from the group of lanthanides, Cr³⁺, Mn²⁺, and Mn⁴⁺. Preferably, said third metal is selected from the group of cerium, terbium, europium, or a mixture thereof.

The third metal may be provided as a metal salt or as a metal alkoxide.

When a metal salt is used, the third metal salt is preferably selected from the group consisting of halides, acetates, acetylacetonates, sulfates, and nitrates.

When an alkoxide is used, the third metal alkoxide preferably has the formula M3(OR)₃, wherein RO⁻ is the alkoxide and R is a C1-C4 group. Preferably, the alkoxide is an isopropoxide, ethoxide and/or tert-butoxide.

Preferably, the (iii) third metal salt and/or alkoxide is provided as a metal salt, more preferably as a metal acetate salt.

Preferably, the (iii) third metal salt and/or alkoxide is substantially anhydrous, and/or is subjected to a water-extracting step. The water-extracting step may be any known in the art. Preferably, the water-extracting is performed as explained for the first metal salt and/or alkoxide.

Preferably, the third metal is cerium and/or terbium. Ce³⁺ shows, upon suitable excitation, yellow-green emission. Tb³⁺ shows, upon suitable excitation, green emission. More preferably, the third metal is a combination of cerium and terbium.

The third metal is present as a dopant. Preferably, the doping ratio is between 0.01% and 3% for cerium doped nanoparticles, more preferably the doping ratio is between about 0.5% and 1.5%. As used herein, the doping ratio is the molar percentage of third metal atoms relative to the total of first metal atoms and third metal atoms in the crystal lattice.

Preferably, in the case of nanoparticles co-doped with both cerium and terbium, the doping ratio of cerium is between about 0.01% and about 2.5%, and the doping ratio of terbium is at least about 10%, more preferably about 30%.

The solvent mixture comprises a glycol and at least a further alcohol.

The glycol can act as a coordinating solvent. Preferably, said glycol is a C2-C8 diol, more preferably said glycol is selected from the group of diethylene glycol, ethylene glycol and triethylene glycol, even more preferably said glycol is diethylene glycol.

The further alcohol can act as a non-coordinating solvent. Preferably, said further alcohol is a C3-C8 alcohol, more preferably selected from the group of 1,4-butanediol, 1,3-butanediol, 1,2-butanediol, 1,5-pentanediol, 1,4-pentanediol, 1,3-pentanediol, 1,2-pentanediol, even more preferably 1,4-butanediol. Preferably, the solvent mixture comprises ethylene glycol or oligomer thereof, and a further alcohol which is not ethylene glycol or an oligomer thereof.

Preferably, the volume ratio of said further alcohol to said glycol is from 1:20 to 1:5 v/v, preferably from 1:10 to 1:5, even more preferably from 12 to 18 v/v%. Lower concentrations of glycol result in more agglomerated particles.

The method further comprises a step (b) of preparing a mixture comprising said (i) first metal salt and/or alkoxide, said (ii) second metal salt and/or alkoxide, said (iii) third metal salt and/or alkoxide, said (iv) solvent mixture comprising said glycol and said further alcohol.

The skilled person is able to determine the relative amounts of the salts and/or alkoxides such as to obtain the desired ratios of the ions in the nanoparticles. The molar amount of third metal salt and/or alkoxide relative to the sum of the first metal salt and/or alkoxide and the third metal salt and/or alkoxide determines the doping concentration.

Preferably, the molar ratio of the combined moles of the first metal and third metal to the second metal, is from about 1:1 to about 1:1.67, preferably from 1:1.20 to 1:1.40.

Preferably, the combined concentration of said (i) first metal salt and/or alkoxide, said (ii) second metal salt and/or alkoxide and said (iii) third metal salt and/or alkoxide, is such that the total metal concentration is at least 0.1 M, preferably at least 0.4 M, and at most about 1.0 M, preferably at most 0.9 M. The molar concentration is determined per volume of solvent mixture, i.e. the combined volume of glycol and further alcohol. Lower concentrations do not allow the nanoparticles to form, and/or can result in agglomeration and poorer optical properties due to a relatively higher amount of water performed particle.

The method further comprises a step (c) of heating the mixture, wherein the heating conditions are characterized in that:
- the pressure during heating is in the range of 20-200 bar, and
- the mixture is heated at 300-400 °C for 120 minutes or less.

It has been found that these conditions allow to form nanoparticles having a small yet well-defined shape with good crystallinity.

The pressure during heating is in the range of 20-200 bar. During the reaction, due to decomposition of the solvent mixture the pressure can increase, even at the same temperature. Preferably, the pressure is from about 20 to about 50 bar.

The mixture is heated at 300-400 °C for 120 minutes or less.

Higher temperatures can allow shorter reaction times. Preferably, the temperature is from about 350 to about 400 °C.

Preferably, the mixture is heated at 300-400 °C for 10 minutes or more. Preferably, the mixture is heated at 300-400 °C for 30 minutes or less. Long reaction times result in aggregation of the particles.

Preferably, an autoclave reactor is used to perform the reaction. Preferably, the autoclave reactor is purged with inert gas before the heating is started, and then heated to the reaction temperature, while stirring. The autoclave might be heated using either thermal radiation (conventional heating), or electromagnetic radiation (e.g. microwaves).

After heating, the reaction mixture may be allowed to cool. It has been found that shorter cooling times are preferred to improve crystal size and minimize agglomeration. More preferably, if using an autoclave reactor, the autoclave reactor is cooled to room temperature before opening.

The obtained nanoparticles can be collected from the reaction mixture using any technique known in the art. Preferably, the obtained nanoparticles are collected in inert atmosphere, such as N₂ or Ar. The obtained nanoparticles are preferably stored in a dry and moisture free environment.

### Nanoparticles

The invention further relates to rare-earth metal doped garnet nanoparticles obtainable by the method of the invention. The nanoparticles have the structure of (M1₁₋ₓM3ₓ)₃(M2)₅O₁₂:, wherein M1 is one or more of yttrium, lutetium, gadolinium and lanthanum; M2 is one or more of aluminum, gallium and scandium; and M3 is one or more optically active ions.

The nanoparticles are characterized by their improved properties. Specifically, the nanoparticles of the invention are characterized by a mean particle size D₅₀ of 10 nm or less, preferably 8 nm or less, and preferably 1 nm or more; and a quantum yield of 60% or more, more preferably 80% or more.

Preferably, M1 is yttrium or lutetium and M2 is aluminium.

Preferably, M3 is selected from the group of cerium, terbium, europium, or a mixture thereof. Ce³⁺ shows, upon suitable excitation, yellow-green emission. Tb³⁺ shows, upon suitable excitation, green emission. Eu³⁺ shows, upon suitable excitation, red emission. More preferably, the M3 is a combination of cerium and terbium.

M3 is present as a dopant. Preferably, the doping ratio is between 0.01% and 3% for cerium doped nanoparticles, more preferably the doping ratio is between about 0.5-1.5%. As used herein, the doping ratio is the molar percentage of M3 atoms relative to the total of M1 atoms and M3 atoms in the crystal lattice.

Preferably, in the case of nanoparticles co-doped with both cerium and terbium, the doping ratio of cerium is between about 0.01% and about 2.5%, and the doping ratio of terbium is at least about 10%, more preferably about 30%.

The nanoparticles of the invention are characterized by a mean particle size D₅₀ of 10 nm or less. The D₅₀ as used herein is defined as the median value of the length of the smallest dimension of the nanoparticles, measured from an ensemble of at least 50 representative particles. The D₅₀ may be measured using transmission electron microscopy (TEM).

The nanoparticles may show an increased photoluminescence quantum yield compared to YAG:RE or LuAG:RE nanoparticles known in the art. Preferably, the photoluminescence quantum yield is as high as possible and at least about 10%. More preferably, the photoluminescence quantum yield is at least about 80%.

The nanoparticles may be used for their luminescent properties, for example in lighting applications, or as taggants. Preferably, the lighting applications are selected from the group consisting of a lamp or luminaire, office lighting systems, household application systems, shop lighting systems, home lighting systems, accent lighting systems, spot lighting systems, theatre lighting systems, fibre-optics application systems, projection systems, self-lit display systems, pixelated display systems, segmented display systems, warning sign systems, medical lighting application systems, indicator sign systems, and decorative lighting systems, portable systems, automotive applications and green house lighting systems. A taggant is a marker added to materials to allow various forms of testing. The nanoparticles may have unique signatures, compared to conventional approaches, such that they may be useful as taggants in anti-counterfeiting measures. For instance, US7667828B discloses a tagging system containing multiple types of taggants that differ from each other.

Preferably, the nanoparticles may be used in luminescent compositions by any means known in the art, for example as described in WO2016/207380, WO2018/167266, WO2018/073441, WO2020/053429, WO2020/053427, WO2021/043762, WO2024/023218, EP23163163, or EP23198627.

### EXAMPLES

### Examples 1-3: YAG:Ce nanoparticles

YAG:Ce nanoparticles were synthesized by mixing (i) 9.900 g (1) or 2.940 g (2-3) yttrium acetate, (ii) 10 g (1) or 3.046 g (2-3) aluminum isopropoxide, (iii) 130 mg (1) or 58 mg (2-3) cerium acetate, (iv) 30 ml diethylene glycol and (v) 170 ml 1,4-butanediol.

The heating temperature and time were varied and the resulting particles were analyzed.

In example 1, the reaction mixture was heated at 300 °C for 120 minutes, then allowed to cool. The pressure was 21 bar (initial) and 60 bar (final).

In example 2, the reaction mixture was heated at 350 °C for 90 minutes, then allowed to cool. The pressure was 30 bar (initial) and 80 bar (final).

In example 3, the reaction mixture was heated at 400 °C for 90 minutes, then allowed to cool. The pressure was 60 bar (initial) and 160 bar (final).

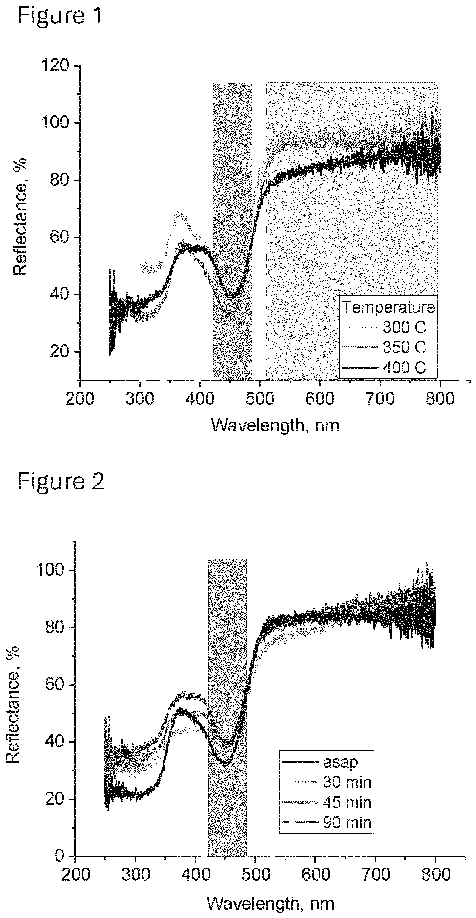

FIG. 1 shows the different diffuse reflection spectra of Examples 1-3. The dip in the reflection values between 420 and 480 nm is predominantly caused by the absorption of light by the Ce³⁺ ions. The spectra show that at temperatures higher than 300 °C the absorption of the Ce³⁺ ions increases. The absorption peaks at 350 °C and decreases again at 400 °C, while still maintaining a higher absorption value than at 300 °C.

### Examples 4-7

YAG:Ce nanoparticles were synthesized by mixing (i) 2953 mg (4, 5 and 7) or 2940 mg (6) yttrium acetate, (ii) 3046 mg aluminum isopropoxide, (iii) 40 mg (4, 5 and 7) or 58 mg (6) cerium acetate, (iv) 30 ml diethylene glycol and (v) 170 ml 1,4-butanediol. The mixture was heated to 400 °C and the pressure was 58 (4), 56 (5), 60 bar (6-7) at the beginning and 130 (4), 160 (5), 190 (6) and 75 bar (7) at the end. The time at 400 °C was varied.

In example 4, the reaction mixture was heated for 30 minutes.

In example 5, the reaction mixture was heated for 45 minutes.

In example 6, the reaction mixture was heated for 90 minutes.

In example 7, the reaction mixture was heated to 400 °C and immediately allowed to cool.

FIG.2 shows the different reflection spectra for Examples 4-7. FIG. 2 shows that the shorter the time spent heating at the reaction temperature, the stronger the absorption band, related to Ce³⁺ absorption, between 420 and 480 nm is. In Example 6 the measured quantum yield (QY) was 11%.

### Examples 8-9

YAG:Ce nanoparticles were synthesized by mixing (i) 2900 mg yttrium acetate, (ii) 3046 mg aluminum isopropoxide, (iii) 108 mg cerium acetate, (iv) 30 ml diethylene glycol and (v) 170 ml 1,4-butanediol.

In Example 8, the mixture was heated at 300 °C for 120 minutes and the pressure was 16 bar (initial) and 32 bar (final).

In Example 9, the mixture was heated at 400 °C for 45 minutes and the pressure was 55 bar (initial) and 155 bar (final).

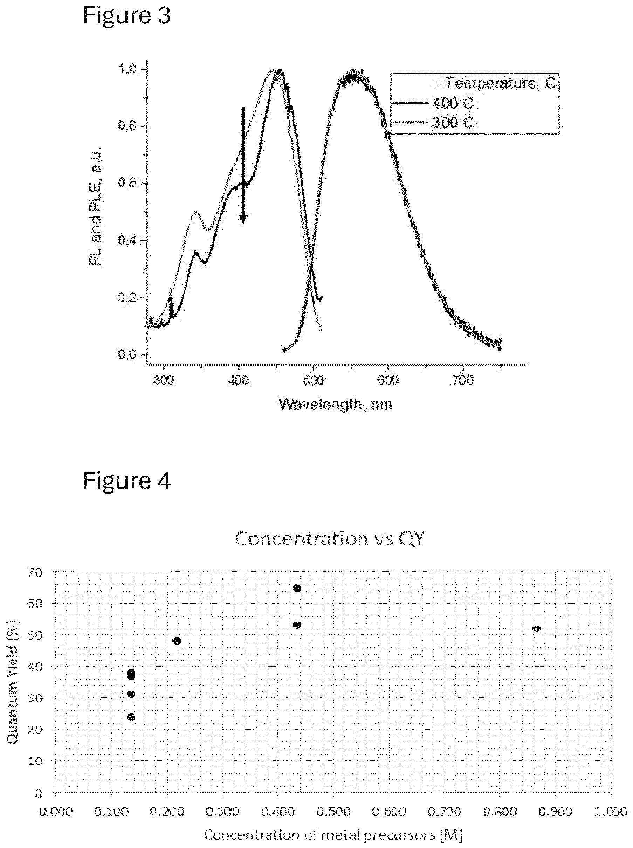

FIG. 3 shows the photoluminescence and photoluminescence excitation spectra for Examples 8 and 9. The peak on the right is caused by the emission of light by the Ce³⁺ ions and this peak position is the same for the particles produced at 300 and 400 °C. The peaks on the left show for which wavelengths the blue emission by the Ce³⁺ ions could be excited. It is clearly observed that both materials show a shoulder in the excitation spectrum around 400 nm, which is more pronounced for the particles produced at 300 °C. This shoulder originates from Ce³⁺ ions being present in an amorphous environment, which is thus less for the particles produced at 400 °C.

### Examples 10-11

YAG:Ce nanoparticles were synthesized by mixing (i) 9980 mg yttrium acetate, (ii) 10000 mg aluminum isopropoxide, (iii) 60 mg cerium acetate, (iv) 30 ml diethylene glycol and (v) 170 ml 1,4-butanediol.

In Example 10, the mixture was heated at 350 °C for 30 minutes and the pressure was 38 bar (initial) and 80 bar (final).

In Example 11, the mixture was heated at 300 °C for 120 minutes and the pressure was 20 bar (initial) and 45 bar (final).

The measured QY was 74% for Example 10 and 80% for Example 11. The average particle size was 10 nm for Example 10 and 9 nm for Example 11.

### Examples 12

YAG:Ce nanoparticles were synthesized by mixing (i) (a-c, f) 2955 mg, (d-e) 9900 mg, (g) 4950 mg, (h) 19800 mg yttrium acetate, (ii) (a-c, f) 3046 mg, (d-e) 10000 mg, (g) 5000 mg, (h) 20000 mg aluminum isopropoxide, (iii) (a-c, f) 38 mg, (d-e) 130 mg, (g) 78 mg, (h) 260 mg cerium acetate, (iv) (a-h) 30 ml diethylene glycol and (v) (a-h) 170 ml 1,4-butanediol.

The mixture was heated at 350 °C for 30 minutes. The values of precursor concentration and Quantum yields for Example 12 are shown here below and in Figure 4.

| **Example** | **Precursor concentration [M]** | **Quantum Yield (%)** |
|---|---|---|
| 12a | 0.135 | 37 |
| 12b | 0.135 | 24 |
| 12c | 0.135 | 31 |
| 12d | 0.433 | 53 |
| 12e | 0.433 | 65 |
| 12f | 0.135 | 38 |
| 12g | 0.217 | 48 |
| 12h | 0.866 | 52 |

## Claims

1. A method for preparing rare-earth metal doped garnet nanoparticles, comprising the steps of:
(a) providing
(i) a first metal salt and/or alkoxide, wherein said first metal is one or more of yttrium, lutetium, gadolinium and lanthanum,
(ii) a second metal salt and/or alkoxide, wherein said second metal is one or more of aluminum, gallium and scandium,
(iii) a third metal salt and/or alkoxide, wherein said third metal is at least one optically active ion, and
(iv) a solvent mixture comprising a glycol and a further alcohol;
(b) preparing a reaction mixture comprising said (i) first metal salt and/or alkoxide, said
(ii) second metal salt and/or alkoxide, said (iii) third metal salt and/or alkoxide, and said (iv) solvent mixture; and
(c) heating the reaction mixture, wherein the heating conditions are **characterized in that**:
- the pressure during heating is in the range of 20-200 bar, and
- the reaction mixture is heated at 300-400 °C for 120 minutes or less.

2. The method according to claim 1, wherein the third metal is selected from the group of cerium, terbium, europium, or a mixture thereof.

3. The method according to any of the preceding claims, wherein the (i) first metal salt and/or alkoxide, the (ii) second salt and/or alkoxide, and/or the (iii) third metal salt and/or alkoxide, are substantially anhydrous, and/or
wherein providing said (i) first metal salt and/or alkoxide, and/or providing said (iii) third metal salt and/or alkoxide comprises a water-extracting step.

4. The method according to any of the preceding claims, wherein said (i) first metal salt and/or alkoxide, and/or said (iii) second metal salt and/or alkoxide, are provided as metal acetate salts.

5. The method according to any of the preceding claims, wherein said (ii) second metal salt and/or alkoxide, is provided as a metal alkoxide, preferably metal isopropoxide.

6. The method according to any of the preceding claims, wherein said (i) first metal comprises, preferably consists essentially of, yttrium and/or lutetium, and wherein said (ii) second metal comprises, preferably consists essentially of, aluminium.

7. The method according to any of the preceding claims, wherein the molar ratio of the total of first metal and third metal to the second metal, is from about 1:1 to about 1:1.67, preferably from 1:1.20 to 1:1.40.

8. The method according to any of the preceding claim, wherein the volume ratio of said further alcohol to said glycol is from 1:20 to 1:5 v/v, preferably from 1:10 to 1:5, even more preferably from 12 to 18 v/v%.

9. The method according to any of the preceding claims, where the combined concentration in the reaction mixture of said (i) first metal salt and/or alkoxide, said (ii) second metal salt and/or alkoxide, and said (iii) third metal salt and/or alkoxide is such that the total metal concentration is at least 0.1 M, preferably at least 0.4M, and at most about 1.0 M, preferably at most 0.9 M.

10. The method according to any of the preceding claims, wherein said further alcohol is a C3-C8 alcohol, preferably 1,4-butanediol.

11. The method according to any of the preceding claims, wherein said glycol is a C2-C8 diol, preferably selected from the group of diethylene glycol, ethylene glycol and triethylene glycol, more preferably diethylene glycol.

12. The method according to any of the preceding claims, wherein an autoclave reactor is used.

13. The method according to any of the preceding claims, wherein the pressure during heating is from about 20 to about 200 bar.

14. The method according to any of the preceding claims, wherein the temperature is from about 300 to about 400 °C.

15. The method according to any of the preceding claims, wherein the mixture is heated at 300-400 °C for 10 minutes or more, and/or wherein the mixture is heated at 300-400 °C for 120 minutes or less, more preferably 30 minutes or less.

16. Rare-earth metal doped garnet nanoparticles obtainable by any of the preceding claims, having the structure of (M1₁₋ₓM3ₓ)₃(M2)₅O₁₂, wherein M1 is one or more of yttrium, lutetium, gadolinium and lanthanum; M2 is one or more of aluminum, gallium and scandium; and M3 is one or more optically active ions, **characterized by**:
i. a mean particle size D₅₀ of 10 nm or less, preferably 8 nm or less, and preferably 1 nm or more; and
ii. a QY of 60% or more, preferably 80% or more.
